(19) Europäisches Patentamt
European Patent Office
Office européen des brevets

(11) **EP 4 621 882 A1**

(12) **EUROPEAN PATENT APPLICATION**
published in accordance with Art. 153(4) EPC

(43) Date of publication:
**24.09.2025 Bulletin 2025/39**

(21) Application number: **23912443.1**

(22) Date of filing: **07.09.2023**

(51) International Patent Classification (IPC):
**H01M 4/62** (2006.01)   **H01M 4/134** (2010.01)
**H01M 4/1395** (2010.01)   **H01M 4/02** (2006.01)

(52) Cooperative Patent Classification (CPC):
**H01M 4/02; H01M 4/134; H01M 4/1395;**
**H01M 4/62;** Y02E 60/10

(86) International application number:
**PCT/KR2023/013386**

(87) International publication number:
**WO 2024/143759 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2022 KR 20220190232**

(71) Applicant: **SK On Co., Ltd.**
**Seoul 03161 (KR)**

(72) Inventors:
• **SONG, Ju-Hye**
**Daejeon 34124 (KR)**
• **YOON, Na-Eun**
**Daejeon 34124 (KR)**

(74) Representative: **Prüfer & Partner mbB**
**Patentanwälte · Rechtsanwälte**
**Sohnckestraße 12**
**81479 München (DE)**

(54) **PROTECTIVE LAYER FOR LITHIUM METAL ANODE, LITHIUM METAL ANODE, MANUFACTURING METHOD THEREOF, AND LITHIUM METAL BATTERY**

(57)    A protective layer (20) for a lithium metal anode, according to one embodiment, comprises a fluorine (F)-containing polymer and has a crystallinity of at least 2%. According to an embodiment, provided are a protective layer for a lithium metal anode and a lithium metal anode comprising same, the protective layer for a lithium metal anode inducing uniform electrodeposition behavior and distribution of lithium ions, and having both excellent ion conductivity and excellent mechanical strength.

[Fig. 1a]

<u>100</u>

20
10

EP 4 621 882 A1

## Description

Technical Field

The present disclosure relates to a protective layer for a lithium metal anode, a lithium metal anode, a manufacturing method thereof, and a lithium metal battery.

Background Art

Interest in electric vehicles (EV) that may replace fossil fuel-based vehicles, one of the main causes of air pollution, has continuously increased, and the development of lithium secondary batteries, which are mainly used as a power source for electric vehicles (EV) due to their high charging voltage and output stability, is actively underway recently.

Meanwhile, lithium metal, which has a relatively high capacity (3860 mAh/g) and low redox potential (-3.04 V vs. SHE), has recently attracted attention as a promising anode material, and research into lithium metal batteries including such lithium metal anodes (LMA) has been also conducted.

However, when lithium metal is applied as an anode, there may be a problem that the high reactivity of lithium metal causes continuous side reactions with the electrolyte, which may result in an unstable film and may exhibit poor lifespan characteristics. Specifically, lithium dendrites, which occur during battery charging/discharging, not only significantly reduce the lifespan of the battery, but also may cause rapid internal short-circuiting, resulting in fire and explosions, and accordingly, technology is required to effectively control such problems.

Disclosure of Invention

Technical Problem

An aspect of the present disclosure is to provide a protective layer for a lithium metal anode, a lithium metal anode, and a manufacturing method thereof that may induce uniform lithium deposition to suppress the growth of lithium dendrites and may effectively improve the electrochemical performance, efficiency, safety, and the like, of a battery.

Another aspect of the present disclosure is to provide a lithium metal battery including a lithium metal anode having excellent electrochemical performance, lifespan characteristics, safety, and the like.

Solution to Problem

A protective layer for a lithium metal anode according to an embodiment may include a polymer including fluorine (F), and a crystallinity of the protective layer for a lithium metal anode may be 2% or more.

The polymer may include at least one selected from polyvinylidene difluoride (PVDF) and polyvinylidene difluoride-hexafluoropropylene copolymer (PVDF-co-HFP).

The polymer may be included in an amount of 5 to 30 wt% based on a total weight of the protective layer for a lithium metal anode.

A crystallinity of the protective layer for a lithium metal anode may be 70% or less.

The protective layer for lithium metal anode may include a lithium salt including fluorine (F).

The lithium salt may include at least one selected from lithium bis(fluorosulfonyl)imide (LiFSI), lithium bis(trifluoromethanesulfonyl)imide (LiTFSI), lithium fluoride (LiF), lithium hexafluorophosphate (LiPF$_6$), lithium tetrafluoroborate (LiBF$_4$), lithium trifluoromethanesulfonate (LiCF$_3$SO$_3$), and lithium hexafluoroarsenate (LiAsF$_6$).

The lithium salt may be included in an amount of 5 to 30 wt% based on a total weight of the protective layer for a lithium metal anode.

A thickness of the protective layer for a lithium metal anode may be 0.1 to 20 $\mu$m.

A lithium metal anode includes the protective layer for a lithium metal anode of one of the embodiments described above; and a lithium metal layer, and the protective layer for a lithium metal anode is formed on at least one surface of the lithium metal layer.

A manufacturing method for a protective layer for lithium metal anode according to an embodiment includes: an operation S1 of applying a composition for a protective layer for a lithium metal anode on at least one surface of the lithium metal layer; and an operation S2 of drying the applied composition for a protective layer for a lithium metal anode, and the composition for a protective layer for a lithium metal anode includes a polymer including fluorine (F).

The composition for a protective layer for a lithium metal anode may further includes an organic solvent.

The organic solvent includes a cyclic ether solvent.

A drying temperature in the operation S2 is 10 to 50°C.

A lithium metal battery according to an embodiment includes the lithium metal anode according to any one of the

embodiments described above.

Advantageous Effects of Invention

According to an embodiment of the present disclosure, provided are a protective layer for a lithium metal anode, inducing uniform electrodeposition behavior and distribution of lithium ions and has both excellent ion conductivity and mechanical strength, and a lithium metal anode.

According to another embodiment, a one-pot reaction through a solution process using a composition may be performed when forming a protective layer on the surface of a lithium metal layer, and a lithium metal anode may be manufactured with high productivity by reducing a process time and costs.

According to another embodiment, a lithium metal anode including a protective layer capable of effectively suppressing the growth of lithium dendrites may be provided by inducing uniform distribution and reversible electrodeposition/stripping behavior of lithium ions during an electrochemical reaction, and the lifespan characteristics, electrochemical performance, or the like, of a lithium metal battery including the same may be improved.

Brief Description of Drawings

FIG. 1A is a conceptual view illustrating a cross-section of a lithium metal anode according to an embodiment.
FIG. 1B is a conceptual view illustrating a cross-section of a lithium metal anode according to another embodiment.
FIG. 2 is a view illustrating the results of overvoltage evaluation according to the time (number of cycles) for a lithium metal battery including a lithium metal anode according to the Comparative Example and the Inventive Example.

Best Mode for Invention

Hereinafter, preferred embodiments will be described with reference to various examples. However, the embodiments are not limited to embodiments described below, and may be modified in various other forms.

Hereinafter, unless otherwise specifically defined, when a part such as a layer, a film, a thin film, a region, or a plate is disposed "on" or "over" another part, this may include not only the case in which the part is "directly over" another part, but also the case in which there is another part interposed therebetween.

As described above, research is conducted on applying lithium metal having relatively high capacity and low redox potential characteristics as an anode, but it is difficult to secure the lifespan characteristics and stability of the battery due to problems such as formation of lithium dendrite.

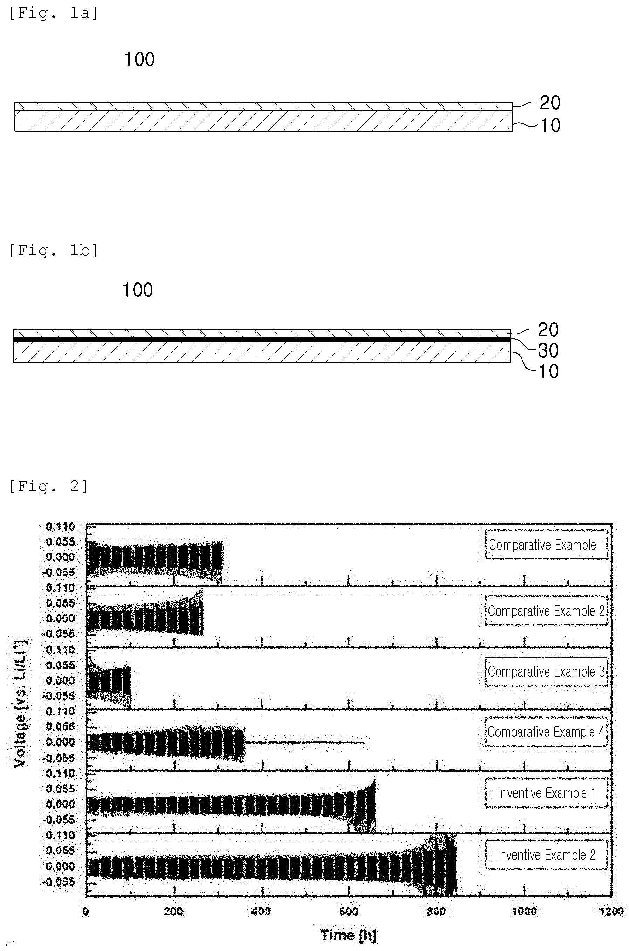

According to an embodiment, a protective layer capable of inducing uniform electrodeposition behavior and distribution of lithium ions may be formed on a surface of a lithium metal layer, thus providing a lithium metal anode in which the above-described problems are effectively suppressed, and the ion conductivity, the lifespan characteristics, and the like, of a lithium metal battery including such an anode may be improved. With reference to FIGS. 1A to 2, specific details are disclosed below.

FIG. 1A is a conceptual view illustrating a cross-section of a lithium metal anode according to an embodiment.

FIG. 1B is a conceptual view illustrating a cross-section of a lithium metal anode according to another embodiment.

FIG. 2 is a view illustrating the results of overvoltage evaluation according to the time (number of cycles) for a lithium metal battery including a lithium metal anode according to the Comparative Example and the Inventive Example.

**Protective Layer for Lithium Metal Anode**

A protective layer 20 for a lithium metal anode according to an embodiment of the present disclosure includes a polymer including fluorine (F), and the crystallinity of the protective layer for a lithium metal anode is 2% or more.

The protective layer 20 for a lithium metal anode is a protective layer including a polymer including fluorine (F) and having a crystallinity at a certain level or more, which may induce uniform electrodeposition behavior and distribution of lithium ions, and both ion conductivity and mechanical strength may be excellent.

The polymer contains fluorine (F), and specifically, may be an organic polymer including a large amount of fluorine (F) (F-Rich). When the protective layer 20 for a lithium metal anode includes the polymer described above, a film including a large amount of fluorine (F) (F-Rich SEI) may be formed inside or on a surface of the protective layer during a battery charge/discharge process. The F-Rich SEI may induce a uniform distribution of lithium ions during an electrochemical reaction and may further improve the performance of a lithium battery by suppressing the growth of lithium dendrites.

The polymer may have a semi-crystalline structure including both a crystallized portion and a partially amorphous portion, and the polymer may include at least one selected from polyvinylidene difluoride (PVDF) and a polyvinylidene difluoride-hexafluoropropylene copolymer (PVDF-co-HFP). Specifically, the polymer may include a copolymer in which two or more monomers respectively including fluorine (F) are copolymerized, and more specifically, the polymer may be a copolymer including a crystallized structural unit and an amorphous structural unit. For example, the polymer may include a polyvinylidene difluoride-hexafluoropropylene copolymer (PVDF-co-HFP). Here, the copolymer may include an alternating polymer, a block copolymer, a random copolymer, a branched copolymer, a crosslinked copolymer, or all of these copolymers.

Although not intended to be bound by a specific theory, the PVDF-co-HFP is a semi-crystalline copolymer including both a crystallized portion (PVDF) and a partially amorphous portion (HFP), and when the protective layer for a lithium metal anode includes the semi-crystalline copolymer, mechanical strength may be secured on an excellent level by the crystallized portion, and lithium ion conductivity may be improved by the amorphous portion.

The polymer may be included in an amount of 5 to 30 wt% based on the total weight of the protective layer 20 for a lithium metal anode. Specifically, the polymer may be included in an amount of 7 wt% or more or 9 wt% or more, and 20 wt% or less or 15 wt% or less based on the total weight of the protective layer 20 for a lithium metal anode.

When the content of the polymer is significantly low, it may be difficult to form F-Rich SEI, and thus, there is a limit to substantially achieving the effect of adding the polymer described above, and when the content of the polymer is significantly high, the viscosity of the polymer solution increases, and thus, when the polymer is coated on a lithium surface, a thickness of the protective layer may become thick, and as a result, resistance increases when lithium is moved, and problems such as an increase in overvoltage and a decrease in cell performance may occur when charging/discharging the battery. Accordingly, when the content of the polymer is appropriately adjusted within the range described above, the ion conductivity, mechanical strength, and the like, of the protective layer may be improved within a range in which the viscosity of the polymer solution does not become excessively high.

A protective layer 20 for a lithium metal anode according to an embodiment includes a polymer having the characteristics described above, and the crystallinity of the protective layer may be controlled to be an appropriate level, thereby effectively improving the mechanical strength, ion conductivity. Hereinafter, the crystallinity of the protective layer will be described in detail.

The crystallinity of the protective layer 20 for a lithium metal anode refers to the crystallinity value of the protective layer itself, and may be measured using differential scanning calorimetry (DSC), X-ray diffraction (XRD), wide-angle X-ray scattering (SAXS), or the like. Specifically, the crystallinity value may be a value calculated according to Equation 1 below by performing XRD analysis on the protective layer 20 for a lithium metal anode.

$$[\text{Equation 1}]$$
$$\text{Crystallinity (\%)} = (Ac \times 100)/At$$

In Equation 1, Ac represents a peak area of a region appearing as a crystalline substance during XRD analysis, and At represents a total peak area during XRD analysis.

The XRD analysis may be performed according to the following conditions.

- Measurement method: After loading a measurement target into a holder, pattern analysis is performed at 0° to 90° - Measurement equipment: XRD analyzer (Empyrean)
- X-ray Source Anode: Cu
- Generator Voltage: 45 kV, Tube Current: 40 mA
- Incidence Beam: BBHD
- Divergence Slit: 1/4°
- Anti-scatter Slit: 1°
- Detector: Pixel Detector
- Sample Stage: Reflection Transmission Spinner
- Use of Zero Background Holder

The protective layer 20 for a lithium metal anode has a crystallinity of 2% or more. In this case, the crystallinity of the protective layer 20 for a lithium metal anode may be 70% or less. Specifically, the crystallinity of the protective layer 20 for a lithium metal anode may be 5% or more, 10% or more, or 20% or more, and 60% or less, 40% or less, or 30% or less.

When the crystallinity of the protective layer 20 for a lithium metal anode is significantly low, the mechanical strength of the protective layer may be insufficient, which may have a practical limitation in suppressing the growth of lithium dendrites, and when the crystallinity is significantly high, resistance may occur when lithium ions move, which may reduce ion conductivity, and the like. Accordingly, when the crystallinity of the protective layer 20 for a lithium metal anode is adjusted within the above-described appropriate range, mechanical strength may be secured to effectively suppress the growth of lithium dendrites, and improve the conductivity of lithium ions at an excellent level at the same time.

The protective layer 20 for a lithium metal anode may further include a lithium salt, and specifically, may further include a lithium salt including fluorine (F). The lithium salt is not particularly limited as long as this is an inorganic salt including lithium (Li) and fluorine (F), but may include at least one selected from lithium bis(fluorosulfonyl)imide (LiFSI), lithium bis(trifluoromethanesulfonyl)imide (LiTFSI), lithium fluoride (LiF), lithium hexafluorophosphate (LiPF$_6$), lithium tetrafluoroborate (LiBF$_4$), lithium trifluoromethanesulfonate (LiCF$_3$SO$_3$), and lithium hexafluoroarsenate (LiAsF$_6$).

When the protective layer 20 for a lithium metal anode further includes a lithium salt including fluorine (F), a film (F-Rich SEI) including a large amount of fluorine (F) inside or on the surface of a finally manufactured protective layer for a lithium metal anode may be formed more excellently.

When the protective layer 20 for a lithium metal anode further includes a lithium salt, the lithium salt may be included in an amount of 5 to 30 wt% based on the total weight of the protective layer for a lithium metal anode. Specifically, the lithium salt may be included in an amount of 7 wt% or more or 9 wt% or more based on the total weight of the protective layer for a lithium metal anode, and may be included in an amount of 20 wt% or less or 15 wt% or less based thereon.

The protective layer 20 for a lithium metal anode may further include a lithio-philic inorganic particle. The lithio-philic inorganic particle is an inorganic particle including a lithio-philic metal, and may be included in a protective layer in the form of an inorganic nitrate (NO$_3^-$), which is a compound made by dissolving a metal or the like in nitric acid. Here, lithio-philic denote having an affinity for lithium, and when a material having a low affinity for lithium and lithium exist together, a lithium metal is selectively deposited first. On the other hand, a lithio-philic material having high affinity for lithium may lower an initial nucleation resistance of the lithium electrodeposition reaction to induce uniform electrodeposition of lithium metal, thereby inhibiting the growth of lithium dendrites.

The lithio-philic metal is a metal having lithio-philic properties such as silver (Ag), gold (Au), zinc (Zn), and magnesium (Mg), which electrochemically reacts with lithium and acts as a seed to lower the lithium nucleation barrier, and may form an alloy with lithium ions to induce uniform electrodeposition behavior of lithium ions. For example, the lithio-philic metal may be Au, Ag, Pt, Al, Mg, Zn, Ni, Te, Bi, Pb, Ga, Cd, Hg, Pd, Sc, Y, Ca, Sr, Ba, Ni, Sn, Cu, Ge, or combinations thereof.

Accordingly, when the protective layer 20 for a lithium metal anode further includes a lithio-philic metal, the growth of lithium dendrites during the battery charge/discharge process may be more effectively suppressed to effectively prevent problems such as a decrease in irreversible capacity and internal short circuits in the battery.

Additionally, when the protective layer 20 for a lithium metal anode further includes a lithio-philic inorganic particle in the form of an inorganic nitrate, a film (N-Rich SEI) including a large amount of nitrogen (N) may be formed inside or on the surface of the protective layer, thereby further improving lithium ion conductivity and mechanical strength.

If the protective layer 20 for a lithium metal anode further includes lithio-philic inorganic particles, the lithio-philic inorganic particles may be included in an amount of 4 to 17 wt%, specifically, 5 to 15 wt%, based on the total weight of the protective layer for a lithium metal anode.

The protective layer 20 for a lithium metal anode may include lithium fluoride (LiF). The lithium fluoride (LiF) is an inorganic compound that may be formed by allowing a fluorine element in the protective layer 20 for a lithium metal anode to react with lithium ions during the battery charge/discharge process, and may further improve the uniform electrodeposition characteristics, the mechanical strength, and the like, of the lithium metal during battery charge/discharge. Accordingly, when the protective layer 20 for a lithium metal anode includes lithium fluoride (LiF), the mechanical strength, lifespan characteristics, electrochemical performance, ion conductivity performance, and the like, of a lithium metal anode 100 may be further improved.

A thickness of the protective layer 20 for a lithium metal anode may be 0.1 to 20 $\mu$m. Specifically, the thickness of the protective layer 20 for a lithium metal anode may be 15 $\mu$m or less or 10 $\mu$m or less. When the thickness of the protective layer 20 for a lithium metal anode is within the above-described range, both the mechanical strength and the electrochemical performance of the lithium metal anode may be excellently improved.

Hereinafter, a lithium metal anode 100 including the protective layer 20 for a lithium metal anode described above will be specifically described.

## Lithium Metal Anode

A lithium metal anode 100 according to an embodiment includes a protective layer 20 for a lithium metal anode according to any one of the above-described embodiments; and a lithium metal layer 10, wherein the protective layer 20 for a lithium metal anode is formed on at least one surface of the lithium metal layer 10.

The lithium metal anode 100 includes a protective layer 20 for a lithium metal anode that may effectively suppress the growth of lithium dendrites by inducing uniform lithium electrodeposition behavior on at least one surface of the lithium metal layer 10. Detailed descriptions of the protective layer 20 for a lithium metal anode will be omitted because the descriptions overlap the description above.

The lithium metal layer 10 includes a lithium metal or an alloy thereof, and may be a metal layer substantially formed only of lithium metal. A thickness of the lithium metal layer 10 is not particularly limited, and may be, for example, 1 to 200 μm.

The lithium metal anode 100 may further include an intermediate layer 30 between the lithium metal layer 10 and the protective layer 20 for a lithium metal anode (see FIG. 1B). The intermediate layer 30 may be formed during the process of manufacturing the lithium metal anode 100 including the lithium metal layer 10 and the protective layer 20 for a lithium metal anode, and may be formed during the charge/discharge process of a lithium metal battery including the lithium metal anode 100 described above. The intermediate layer 30 may induce uniform electrodeposition of lithium ions between the lithium metal layer 10 and the protective layer 20 for a lithium metal anode and may improve the mechanical strength, and the like, of the lithium metal anode 100.

The intermediate layer 30 may include lithium fluoride (LiF) and may have a thickness of 0.5 to 1 μm.

The lithium metal anode 100 may be manufactured by the anode manufacturing method described below.

### Manufacturing Method for Anode

A method for manufacturing a lithium metal anode 100 according to an embodiment of the present disclosure includes: an operation S1 of applying a composition for a protective layer for a lithium metal anode on at least one surface of a lithium metal layer; and an operation S2 of drying the applied composition for a protective layer for a lithium metal anode, and the protective layer for a lithium metal anode composition includes a polymer including fluorine (F).

Conventional methods for manufacturing a lithium metal anode include (1) deposition methods such as atomic layer deposition (ALD) and pulsed laser deposition (PLD), and (2) a photopolymerization method of irradiating ultraviolet rays to a polymer solution applied thereto. However, the deposition method requires separate equipment and has limitations in reducing process costs and time, which may made it difficult to secure productivity, and the like, and the photopolymerization method requires raw materials such as a photopolymerizer and a photoinitiator, and a separate light irradiation device, which may cause problems such as increased costs.

On the other hand, in the case of the method for manufacturing a lithium metal anode according to an embodiment, a one-pot reaction may be performed through a solution process using a composition when forming a protective layer on a surface of a lithium metal layer, and the process time and costs may be shortened, so that a lithium metal anode may be manufactured with high productivity.

The composition for the protective layer for a lithium metal anode may further include a lithium salt including fluorine (F) in addition to the polymer including fluorine (F). Since detailed descriptions of the polymer including fluorine (F), lithium salt, and the like, overlap the above-described contents, the descriptions will be omitted.

The composition for the protective layer for a lithium metal anode may further include an organic solvent, and the organic solvent may include a cyclic ether solvent. The cyclic ether solvent may include a cyclic ether solvent other than a dioxolane solvent, such as dioxolane, methyldioxolane, dimethyldioxolane, vinyldioxolane, methoxydioxolane, or ethylmethyldioxolane. Specifically, the cyclic ether solvent may include at least one selected from dioxane, trioxane, tetrahydrofuran, methyltetrahydrofuran, dimethyltetrahydrofuran, dimethoxytetrahydrofuran, ethoxytetrahydrofuran, and tetrahydropyran, and more specifically, the cyclic ether solvent may include tetrahydrofuran (THF).

When the composition for the protective Layer for a lithium metal anode further includes an organic solvent, the content of the organic solvent in the composition may be, for example, 50 to 99 wt% or 60 to 90 wt%.

The composition for a protective layer for lithium metal may be manufactured by stirring a solution in which a polymer including fluorine (F) is added to the organic solvent at room temperature for 3 to 48 hours. At this time, the stirring speed (RPM) may be 100 to 400 RPM.

When the composition for the protective layer for lithium metal further includes a lithium salt, the composition for a protective layer for lithium metal may be manufactured by adding the lithium salt to a first solution in which a polymer including fluorine (F) is added to an organic solvent to manufacture a second solution, and stirring the second solution at room temperature for 3 to 24 hours. In this case, the stirring speed (RPM) may be 100 to 400 RPM.

The operation S1 of applying the composition for the protective layer for a lithium metal anode on at least one surface of the lithium metal layer may be performed by a method such as doctor blade coating, dip coating, bar coating, or casting, but the present disclosure is not limited thereto.

A drying temperature in the operation S2 of drying the applied composition for the protective layer for a lithium metal anode may be 10 to 50°C. Specifically, the drying temperature in the operation S2 may be room temperature (20 to 25°C). The conventional manufacturing method may have a problem that additional heat treatment process costs occur because the drying process is performed at a relatively high temperature range (100°C or higher), and there may be a problem that work safety issues may occur due to the high temperature. Accordingly, in the manufacturing method of a lithium metal anode according to an embodiment, when the drying temperature of the operation S2 is within the above-described range, the process convenience, economy, safety, and the like, may be relatively excellent.

**Lithium Metal Battery**

A lithium metal battery according to an embodiment includes a lithium metal anode 100 according to any one of the above-described embodiments. Specifically, the lithium metal battery may include a lithium metal anode 100 according to any one of the above-described embodiments, a cathode, and an electrolyte, and may optionally include or not include a separator.

The cathode is not particularly limited as long as this is commonly used in a secondary battery, and may include a lithium-transition metal oxide as a cathode active material, and for example, the cathode may include a lithium-transition metal oxide such as lithium cobalt oxide ($LiCoO_2$), lithium manganese oxide ($LiMn_2O_4$), or lithium nickel oxide ($LiNiO_2$), or a lithium-transition metal composite oxide in which some of these transition metals are substituted with other transition metals. Specifically, the cathode active material may be an NCM-based cathode active material represented by the following chemical formula 1; or an LLO (Li rich layered oxides, Over-Lithiated Oxides, Over-Lithiated layered oxide, OLO, LLOs)-based cathode active material represented by the following chemical formula 2.

[Chemical Formula 1]     $Li_aNi_bM_{1-b}O_2$

In the chemical formula 1, $0.9 \leq a \leq 1.2$, $b \geq 0.5$ are satisfied, and M represents at least one of Na, Mg, Ca, Y, Ti, Hf, V, Nb, Ta, Cr, Mo, W, Mn, Co, Fe, Cu, Ag, Zn, B, Al, Ga, C, Si, Sn, Ba, and Zr.

Specifically, in the chemical formula 1, $0.95 \leq a \leq 1.08$ may be satisfied, and b may be 0.6 or more, 0.8 or more, more than 0.8, 0.9 or more, or 0.98 or more.

Specifically, in the chemical formula 1, M may include Co, Mn, or Al, and more specifically, M may include Co and Mn and optionally further include Al.

[Chemical Formula 2]     $Li_{1+x}M_{1-x}O_2$

In the chemical formula 2, $0 \leq x \leq 0.4$ is satisfied, and M is at least one of Na, Mg, Ca, Y, Ti, Hf, V, Nb, Ta, Cr, Mo, W, Ni, Mn, Co, Fe, Cu, Ag, Zn, B, Al, Ga, C, Si, Sn, Ba, or Zr.

Specifically, in the chemical formula 2, M may include Ni, Co, Mn, or Al, and more specifically, may include Ni, Co, and Mn, and optionally further include Al.

Additionally, the cathode active material may be a lithium iron phosphate (LFP)-based cathode active material represented by the chemical formula of $LiFePO_4$.

Additionally, the lithium-transition metal oxide may be a secondary particle formed into a substantially single particle by assembling or agglomerating a plurality of primary particles, or may be in the form of a single particle. The single particle form may denote, for example, excluding the secondary particle formed into a substantially single particle by assembling or agglomerating a plurality of primary particles (for example, more than 10 primary particles). However, the single particle form does not exclude the fact that single particles in the range of 2 to 10 are attached to or in close contact with each other to have a single body form. In some embodiments, the cathode active material may include both a secondary particle form and a single particle form.

The lithium metal battery may or may not further include a separator, and when the lithium metal battery further includes the separator, the separator is not particularly limited as long as this is applicable to a typical lithium secondary battery. For example, the separator may include a porous substrate, and the porous substrate may be a polyolefin-based porous substrate. The polyolefin-based porous substrate may have a plurality of pores and may be a substrate typically used in electrochemical elements. The porous polyolefin substrate may be selected from the group consisting of, for example, a polyethylene single film, a polypropylene single film, a polyethylene/polypropylene double film, a polypropylene/polyethylene/polypropylene triple film, and a polyethylene/polypropylene/polyethylene triple film, but the present disclosure is not limited thereto.

The lithium metal battery may be accommodated in a separate case together with an electrolyte. In this case, the electrolyte may be a liquid electrolyte including a lithium salt and an organic solvent, and the lithium salt is expressed by the chemical formula of $Li^+X^-$ and may include one or two or more types of anions ($X^-$) such as $F^-$, $Cl^-$, $Br^-$, $I^-$, $NO_3^-$, $N(CN)_2^-$, $BF_4^-$, $ClO_4^-$, $PF_6^-$, and the like, but the present disclosure is not limited thereto. Additionally, the organic solvent may include, for example, one type or two or more types of propylene carbonate (PC), ethylene carbonate (EC), diethyl carbonate (DEC), dimethyl carbonate (DMC), ethylmethyl carbonate (EMC), fluoroethylene carbonate (FEC), and the like, but the present disclosure is not limited thereto.

Meanwhile, the lithium metal battery may be an all-solid-state battery including a lithium metal anode 100 according to any one of the above-described embodiments, a cathode, and a solid electrolyte layer disposed between the anode and the cathode.

The solid electrolyte included in the solid electrolyte layer is not particularly limited and may include at least one of conventional solid electrolytes. For example, the solid electrolyte may be an oxide-based solid electrolyte such as

$Li_7La_3Zr_2O_{12}$(LLZO) and the like; a sulfide-based solid electrolyte such as Thio-LISICON, $\beta$-$Li_3PS_4$, $Li_7P_3S_{11}$, $Li_2S$-$P_2S_5$, LGPS, an argyrodite-based compound, and the like; or a polymer-based solid electrolyte such as (1) a solid polymer electrolyte formed by adding a polymer resin such as a polyether-based polymer to a lithium salt, and (2) a polymer gel electrolyte in which an organic electrolyte including an organic solvent and a lithium salt is impregnated into a polymer resin.

The argyrodite-based compound may be represented by the following chemical formula 3.

[Chemical Formula 3]      $Li_a^+A_b^+Q_cX_d^-$

In the chemical formula 3, $1 \leq a \leq 12$, $0 \leq b \leq 5$, $0 \leq c \leq 10$, and $0 \leq d \leq 2$ are satisfied, A represents at least one of P, As, Ge, Ga, Sb, Si, Sn, Al, In, Ti, V, Nb, or Ta, Q represents at least one of S, Se, or Te, and X represents at least one of Cl, Br, I, F, CN, OCN, SCN, or $N_3$.

Specifically, the argyrodite compound may be a compound represented by the chemical formula of $Li_{7-x}PS_{6-x}Cl_x$ ($0 \leq x \leq 2$), $Li_{7-x}PS_{6-x}Br_x$ ($0 \leq x \leq 2$), or $Li_{7-x}PS_{6-x}I_x$ ($0 \leq x \leq 2$).

More specifically, the argyrodite compound may be a compound represented by chemical formulas such as $Li_6PS_5Cl$, $Li_6PS_5Br$, $Li_6PS_5I$, $Li_{6.5}Sb_{0.5}Ge_{0.5}S_5I$, $Li_{5.7}PS_{4.7}Cl_{1.3}$, and $Li_{6.6}Sb_{0.5}Si_{0.6}S_5I$.

When the lithium metal battery includes the lithium metal anode 100 described above, the growth of lithium dendrites may be effectively suppressed by the protective layer 20 capable of inducing uniform lithium electrodeposition behavior, so that the lifespan characteristics, electrochemical performance, and safety may all be excellent.

Mode for Invention

**Example**

1. Protective Layer for Lithium Metal Anode and Lithium Metal Anode

1) Manufacturing of Protective Layer and Anode

(1) Inventive Example 1

A solution in which polyvinylidene difluoride-hexafluoropropylene copolymer (PVDF-co-HFP) powder particles having a crystallinity of 32.4% were added to tetrahydrofuran (THF), an organic solvent, was stirred at room temperature for 12 to 24 hours to manufacture a composition for a protective layer of Example 1 in which PVDF-co-HFP was well dispersed. In this case, the content of PVDF-co-HFP was 10 wt% based on the entire solution.

The composition for a protective layer was coated on a surface of a lithium metal layer (thickness: 100 $\mu$m) to a thickness of 10 $\mu$m by a dip coating method, and then dried at room temperature for 30 minutes or more to manufacture a lithium metal anode of Inventive Example 1 in which a protective Layer was formed on the lithium metal layer.

(2) Inventive Example 2

A lithium metal anode of Inventive Example 2 was manufactured in the same manner as that of Inventive Example 1, except that lithium bis(fluorosulfonyl)imide (LiFSI) as a lithium salt was further added to the composition for a protective layer of inventive Example 1, and stirred at room temperature for 3 to 24 hours to manufacture a composition for a protective layer of Inventive Example 2 in which the content ratio of LiFSI in the solution was the same as that of PVDF-co-HFP (weight ratio = 1:1). In this case, the contents of PVDF-co-HFP and LiFSI in the composition for a protective layer were both 9.09 wt%.

(3) Comparative Example 1

A lithium metal anode of Comparative Example 1 was manufactured in the same manner as that of Inventive Example 1, except that polyvinylidene difluoride-hexafluoropropylene copolymer (PVDF-co-HFP) was added to N-methyl-2-pyrrolidone (NMP), an organic solvent, and a composition for a protective layer having a content of PVDF-co-HFP of 1 wt% based on a total solution was coated on a surface of a lithium metal layer, and the composition was dried at 90°C for 1 hour.

(4) Comparative Example 2

A first solution was manufactured by dissolving 0.031 g of lithium fluoride and 1.5 g of lithium bis(fluorosulfonyl)imide (LiFSI) in 0.75 g of acetone, and a second solution was manufactured by dissolving 0.5 g of polyvinylidene difluoride-hexafluoropropylene copolymer (PVDF-co-HFP) in N,N-dimethylformamide (1.75 g) and stirring the same at 40°C. Then, a lithium metal anode of Comparative Example 2 was manufactured in the same manner as that of Inventive Example 1, except that a solution obtained by mixing the first and second solutions was stirred at 40°C to manufacture a composition for a protective layer, which was coated on a surface of the lithium metal layer, and a temperature was raised to 120°C and then, the surface of the lithium metal layer was dried for more than 12 hours.

(5) Comparative Example 3

To a mixture including polyvinylidene difluoride-hexafluoropropylene copolymer (PVDF-co-HFP) and ethoxylated trimethylolpropane triacrylate (ETPTA) in a 1:3 ratio (0.5 g and 1.5 g added, respectively) and including 2-hydroxy-2-methyl-1-phenyl-1-propanol (HMPP) in an amount of about 0.7 wt% (0.015 g added), a solution including lithium nitrate ($LiNO_3$) in the amount of 1 wt% as a dioxolane (DOL)/dimethoxyethane (DME) solution including lithium bis(trifluoromethanesulfonyl)imide (LiTFSI) of 1 M was added in an amount 1.5 times the mass of the mixture to manufacture a composition for a protective layer, which is a photopolymerization precursor solution.
After coating the photopolymerization precursor solution on the surface of the lithium metal layer at a thickness of 30 $\mu$m by a doctor blade coating method, light having a wavelength of the ultraviolet range (365 nm) was irradiated for 20 seconds, and thus, the photopolymerization precursor solution was photocured to manufacture a lithium metal anode of Comparative Example 3 including a gel polymer layer formed on the surface of the lithium metal layer as a protective Layer.

(6) Comparative Example 4

An anode in which a separate protective layer for a lithium metal anode was not formed on the surface of the lithium metal layer (thickness: 100 $\mu$m) was applied as the lithium metal anode of Comparative Example 4.

2) Evaluation of Protective Layer (crystallinity)

The crystallinity of the protective layer formed on the lithium metal layer was measured for the lithium metal anodes of the inventive examples and comparative examples manufactured descried above (except for Comparative Example 4 which does not include a protective layer).
In this case, a crystallinity value of the protective layer was calculated according to the following Equation 1 after performing XRD analysis using an XRD analyzer (Empyrean) under the following conditions and method, and results thereof are shown in Table 1 below.

$$[\text{Equation 1}]$$

$$\text{Crystallinity (\%) = (Ac x 100)/At}$$

In Equation 1, Ac represents a peak area of a region appearing as a crystalline substance during XRD analysis, and At represents the total peak area during XRD analysis.

- Measurement method: After loading a measurement target into a holder, pattern analysis is performed at 0° to 90°
- X-ray Source Anode: Cu
- Generator Voltage: 45 kV, Tube Current: 40 mA
- Incidence Beam: BBHD
- Divergence Slit: 1/4°
- Anti-scatter Slit: 1°
- Detector: Pixel Detector
- Sample Stage: Reflection Transmission Spinner
- Use of Zero Background Holder

2. Lithium Metal Battery

1) Manufacturing of Battery

A 2032 coin-type lithium metal symmetric battery including the anode manufactured as described above; a polyolefin-based separator coated on a ceramic-based inorganic material; and 1.0M $LiPF_6^-$ EC/EMC (3/7, vol%) + 2 wt% FEC electrolyte was manufactured according to Inventive Examples and Comparative Examples. In this case, the protective layer was only coated on the lithium electrode corresponding to a working electrode, and in the case of Comparative Example 4, an anode and a battery were manufactured without coating a separate protective layer.

2) Battery Evaluation

The overvoltage evaluation according to the number of cycles was performed at room temperature for the 2032 coin-type lithium metal symmetric battery manufactured as described above. As evaluation conditions, the current density was 1 mA/cm$^2$ and an electrodeposition amount was 2 mAh/cm$^2$, and the degree of overvoltage occurring during the oxidation/reduction reaction of lithium at a limited capacity and current density for the battery was measured over time, and the lifespan characteristics according to the number of cycles of the battery were evaluated.

Specifically, the time and the number of cycles at a time point at which the overvoltage (1) increased to a value approaching 0.1 V or (2) decreased to a value approaching 0 V were measured, and the corresponding time point was determined to be the end of the lifespan of the battery. The number of cycles until the end of the lifespan of each battery was measured, and results thereof are shown in Table 1 below.

Table 1:

| Division | Crystallinity of Protective Layer (%) | Cycle Number (times) |
|---|---|---|
| **Comparative Example 1** | 0 (amorphous) | 78 |
| **Comparative Example 2** | 0 (amorphous) | 65 |
| **Comparative Example 3** | 0 (amorphous) | 26 |
| **Comparative Example 4** | - | 90 |
| **Inventive Example 1** | 6.8 | 157 |
| **Inventive Example 2** | 27.4 | 190 |

Referring to Table 1 and FIG. 2, the batteries of Comparative Examples 1 to 3, in which an amorphous protective layer having a crystallinity of 0%, which is less than 2%, was formed on the lithium metal layer, and the battery of Comparative Example 4, in which no protective layer was formed on the lithium metal layer, both showed less than 100 cycles in terms of the end of lifespan (i.e., the number of cycles at which the overvoltage suddenly rises to 0.1 V or suddenly drops to 0 V), whereas the batteries of Inventive Examples 1 and 2, in which a protective layer having a crystallinity of 2% or more was formed on the lithium metal layer, showed more than 150 cycles, respectively, and had better lifespan characteristics than Comparative Examples 1 to 3.

Considering the results, depending on a manufacturing method of the anode including the protective layer for a lithium metal anode, there may be a difference in the crystallinity of the protective layer, and in the case of the protective layer having a substantially amorphous form due to low crystallinity, it is determined that there is a practical limit to improving the lifespan characteristics of the lithium metal anode and the lithium metal battery including the same.

On the other hand, when a protective layer including a polymer including fluorine (F) and having a crystallinity of 2% or more is formed on the lithium metal layer as in Inventive Examples 1 and 2, it is determined that the lifespan characteristics of the lithium metal anode and the lithium metal battery including the same may be excellently improved. In addition, when the protective layer further includes a lithium salt including fluorine (F) as in Inventive Example 2, it is determined that the lifespan characteristics of the lithium metal battery may be further improved.

Although embodiments of the present disclosure have been described above, the scope of the present disclosure is not limited thereto, and it will be apparent to those skilled in the art that modifications and variations could be made without departing from the scope of the technical concept of the present disclosure as defined by the appended claims.

[Description of Reference Characters]

10: Lithium Metal Layer
20: Protective Layer
30: Intermediate Layer
100: Lithium Metal Anode

Industrial Applicability

As described above, the features of the present disclosure may be applied to a protective layer for a lithium metal anode, a lithium metal anode, a manufacturing method therefor, and a lithium metal battery in whole or in part.

**Claims**

1.  A protective layer for a lithium metal anode comprising a polymer including fluorine (F),
    wherein a crystallinity of the protective layer for a lithium metal anode is 2% or more.

2.  The protective layer for a lithium metal anode of claim 1, wherein the polymer includes at least one selected from polyvinylidene difluoride (PVDF) and polyvinylidene difluoride-hexafluoropropylene copolymer (PVDF-co-HFP).

3.  The protective layer for a lithium metal anode of claim 1, wherein the polymer is included in an amount of 5 to 30 wt% based on a total weight of the protective layer for a lithium metal anode.

4.  The protective layer for a lithium metal anode of claim 1, wherein a crystallinity of the protective layer for a lithium metal anode is 70% or less.

5.  The protective layer for a lithium metal anode of claim 1, further comprising a lithium salt including fluorine (F).

6.  The protective layer for a lithium metal anode of claim 5, wherein the lithium salt includes at least one selected from lithium bis(fluorosulfonyl)imide (LiFSI), lithium bis(trifluoromethanesulfonyl)imide (LiTFSI), lithium fluoride (LiF), lithium hexafluorophosphate ($LiPF_6$), lithium tetrafluoroborate ($LiBF_4$), lithium trifluoromethanesulfonate ($LiCF_3SO_3$), and lithium hexafluoroarsenate ($LiAsF_6$).

7.  The protective layer for a lithium metal anode of claim 5, wherein the lithium salt is included in an amount of 5 to 30 wt% based on a total weight of the protective layer for a lithium metal anode.

8.  The protective layer for a lithium metal anode of claim 1, wherein a thickness of the protective layer for a lithium metal anode is 0.1 to 20 $\mu$m.

9.  A lithium metal anode comprising the protective layer for a lithium metal anode of one of claims 1 to 8; and a lithium metal layer,
    wherein the protective layer for a lithium metal anode is formed on at least one surface of the lithium metal layer.

10. A manufacturing method for a protective layer for lithium metal anode, comprising:

    an operation S1 of applying a composition for a protective layer for a lithium metal anode on at least one surface of the lithium metal layer; and
    an operation S2 of drying the applied composition for a protective layer for a lithium metal anode,
    wherein the composition for a protective layer for a lithium metal anode includes a polymer including fluorine (F).

11. The manufacturing method for a protective layer for a lithium metal anode of claim 10, wherein the composition for a protective layer for a lithium metal anode further includes an organic solvent, and the organic solvent includes a cyclic ether solvent.

12. The manufacturing method for a protective layer for a lithium metal anode of claim 10, wherein a drying temperature in the operation S2 is 10 to 50°C.

13. A lithium metal battery comprising the lithium metal anode according to claim 9.

[Fig. 1a]

100

[Fig. 1b]

100

[Fig. 2]

## INTERNATIONAL SEARCH REPORT

| International application No. |
| --- |
| **PCT/KR2023/013386** |

**A.     CLASSIFICATION OF SUBJECT MATTER**

**H01M 4/62**(2006.01)i; **H01M 4/134**(2010.01)i; **H01M 4/1395**(2010.01)i; **H01M 4/02**(2006.01)i

According to International Patent Classification (IPC) or to both national classification and IPC

**B.     FIELDS SEARCHED**

Minimum documentation searched (classification system followed by classification symbols)

H01M 4/62(2006.01); H01M 10/052(2010.01); H01M 10/056(2010.01); H01M 10/42(2006.01); H01M 4/134(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리비닐리덴 플루오라이드(Polyvinylidene Fluoride), 헥사플루오로프로필렌 (hexafluoropropylene), 고분자(polymer), 음극(negative electrode), 보호막(protection), 리튬금속전지(lithium metal battery)

**C.     DOCUMENTS CONSIDERED TO BE RELEVANT**

| Category* | Citation of document, with indication, where appropriate, of the relevant passages | Relevant to claim No. |
| --- | --- | --- |
| X | CN 111435728 A (SVOLT ENERGY TECHNOLOGY CO., LTD.) 21 July 2020 (2020-07-21) See abstract, claims 1-4 and 6, and paragraphs [0071]-[0079]. | 10-12 |
| Y | | 1-9,13 |
| Y | LU, R. et al. PVDF-HFP layer with high porosity and polarity for high-performance lithium metal anodes in both ether and carbonate electrolytes. Nano Energy. 2022, vol. 95, thesis no. 107009, inner pp. 1-9 (publication date 10 February 2022). See inner pages 1 and 3. | 1-9,13 |
| A | KR 10-2019-0070007 A (SAMSUNG ELECTRONICS CO., LTD. et al.) 20 June 2019 (2019-06-20) See claims 1-28. | 1-13 |
| A | KR 10-2018-0121391 A (SAMSUNG ELECTRONICS CO., LTD. et al.) 07 November 2018 (2018-11-07) See claims 1-40. | 1-13 |

☑ Further documents are listed in the continuation of Box C.          ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **18 December 2023** | **18 December 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013386** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0117649 A (LG CHEM, LTD.) 24 October 2017 (2017-10-24)<br>See claims 1-20. | 1-13 |

Form PCT/ISA/210 (second sheet) (July 2022)

### INTERNATIONAL SEARCH REPORT
**Information on patent family members**

International application No.

**PCT/KR2023/013386**

| Patent document cited in search report | | | Publication date (day/month/year) | Patent family member(s) | | | Publication date (day/month/year) |
|---|---|---|---|---|---|---|---|
| CN | 111435728 | A | 21 July 2020 | CN | 111435728 | B | 21 April 2023 |
| KR | 10-2019-0070007 | A | 20 June 2019 | CN | 110010853 | A | 12 July 2019 |
| | | | | EP | 3499628 | A1 | 19 June 2019 |
| | | | | EP | 3499628 | B1 | 19 October 2022 |
| | | | | KR | 10-2568794 | B1 | 16 August 2023 |
| | | | | US | 11600815 | B2 | 07 March 2023 |
| | | | | US | 2019-0181435 | A1 | 13 June 2019 |
| | | | | US | 2023-0134462 | A1 | 04 May 2023 |
| KR | 10-2018-0121391 | A | 07 November 2018 | CN | 108807851 | A | 13 November 2018 |
| | | | | CN | 108807851 | B | 07 July 2023 |
| | | | | EP | 3396736 | A1 | 31 October 2018 |
| | | | | EP | 3396736 | B1 | 23 September 2020 |
| | | | | US | 10971753 | B2 | 06 April 2021 |
| | | | | US | 2018-0316051 | A1 | 01 November 2018 |
| KR | 10-2017-0117649 | A | 24 October 2017 | CN | 108475828 | A | 31 August 2018 |
| | | | | CN | 108475828 | B | 28 March 2023 |
| | | | | US | 2018-0294513 | A1 | 11 October 2018 |
| | | | | WO | 2017-179848 | A1 | 19 October 2017 |

Form PCT/ISA/210 (patent family annex) (July 2022)